# EUROPÄISCHE PATENTSCHRIFT

(11) **EP 1 070 827 B1**
(45) Veröffentlichungstag und Bekanntmachung des Hinweises auf die Patenterteilung: **25.08.2004**
(21) Anmeldenummer: 00113455.0
(22) Anmeldetag: 24.06.2000
(51) Int. Cl.: E06B 9/84, H02K 49/06

(54) **Antriebsvorrichtung aus einem Motor und einem Getriebe**
Driving device consisting of a motor and a gear
Dispositif d'entrainement consistant en un moteur et une boîte de vitesse

(30) Priorität: 23.07.1999 DE 19934623
(43) Veröffentlichungstag der Anmeldung: 24.01.2001
(73) Patentinhaber: elero GmbH, 72660 Beuren (DE)
(72) Erfinder: Gollmer, Werner, 73252 Lenningen (DE); Wolfer, Herman, 73252 Lenningen-Gutenberg (DE)
(74) Vertreter: Patentanwälte Westphal, Mussgnug & Partner

(56) Entgegenhaltungen:
- DE-A- 3 628 285
- DE-A- 3 905 216
- FR-A- 1 492 950
- FR-A- 2 553 741
- GB-A- 1 127 628
- US-A- 4 785 688
- PATENT ABSTRACTS OF JAPAN vol. 017, no. 460 (E-1419), 23. August 1993 (1993-08-23) & JP 05 103442 A (OGURA CLUTCH CO LTD), 23. April 1993 (1993-04-23)

## Beschreibung

Die Erfindung betrifft eine Antriebsvorrichtung gemäß den Merkmalen des Oberbegriffs des Anspruchs 1.

Eine solche Antriebsvorrichtung ist z. B. aus US-A-4,785,688 bekannt.

Derartige Antriebsvorrichtungen, die aus einem Elektromotor und einem Getriebe aufgebaut sind, dienen z. B. zum Antrieb von Behängen, wie z. B. Rolläden oder Jalousien. Um bei Ausfall des Motors ein Herunterfallen der Jalousie oder des Rolladens zu verhindern, sind Rolladen- oder Jalousienantriebe mit einer Bremse zum Anhalten der Jalousie oder des Rolladens ausgerüstet. Zum Bremsen für derartige Antriebe sind z. B. elektromagnetische Polreibungsbremsen oder Kurzschlussbremsen vorgesehen, bei denen ein erstes z. B. scheibenförmiges Bremselement mittels Magnet- oder Federkraft auf ein zweites Bremselement aufschlägt, was ein ruckartiges Bremsen verursacht sowie ein lautes Klackgeräusch erzeugt.

Es ist daher Aufgabe der Erfindung, einen Antrieb insbesondere für Rolläden oder Jalousien so zu gestalten, dass ein schonendes und leises, aber dennoch sicheres Abbremsen erzielt wird.

Die Erfindung löst diese Aufgabe mit den Merkmalen des Anspruchs 1.

Die Erfindung verlässt die bekannten Pfade, die darin bestehen, die Bremse am Ausgang des Antriebes - also am Ausgang des Drehmomentwandlers - anzuordnen und erst bei Ausfall des Motors den Bremsvorgang einzuleiten und beschreitet vielmehr neue, zunächst sogar abwegig erscheinende Wege.

Die erste zunächst als abwegig erscheinende erfinderische Maßnahme liegt darin, die Hysteresebremse zwischen dem Motor und dem Drehmomentwandler anzuordnen. Die zweite zunächst ebenso als unsinnig erscheinende Maßnahme sieht vor, die Hysteresebremse stets in Bremsstellung zu halten, wobei durch Bestromung einer Kompensationsspule die Bremswirkung der Hysteresebremse aufhebbar ist.

Die Hysteresebremse ist nun so dimensioniert, dass einerseits ihre Bremskraft den Motor nur in geringem Maße bremst, andererseits aber bei Ausfall des Motors der Antrieb sicher und zuverlässig in kurzer Zeit bis zum Stillstand abgebremst wird.

Durch die Maßnahme, die Hysteresebremse zwischen dem Motor und dem Drehmomentwandler vorzusehen, ist es möglich, die Bremse dauernd in Bremsstellung zu betreiben, weil der Motor das Bremsmoment überwindet. Wäre die Hysteresebremse dagegen am Ausgang des Drehmomentwandlers angeordnet, so könnte derselbe Motor das Bremsmoment nicht mehr überwinden. Bei Ausfall des Motors wird der Antrieb nicht ruckartig wie bei den bekannten Rolladenantrieben, sondern stetig und sanft abgebremst, was der Lebensdauer des Rolladens und des Rolladenantriebs zugute kommt. Außerdem tritt nicht mehr das laute störende Klackgeräusch auf, weil weder Teile aneinander mechanisch reiben noch aufeinander klatschen.

Die Erfindung wird nun anhand der Zeichnung beschrieben und erläutert.

In der Zeichnung zeigen
- Fig. 1: ein Ausführungsbeispiel der Erfindung,
- Fig. 2: ein erstes Ausführungsbeispiel einer Trommelhysteresebremse,
- Fig. 3: ein zweites Ausführungsbeispiel einer Trommelhysteresebremse,
- Fig. 4: ein erstes Ausführungsbeispiel einer Scheibenhysteresebremse und
- Fig. 5: ein zweites Ausführungsbeispiel einer Schreibenhysteresebremse.

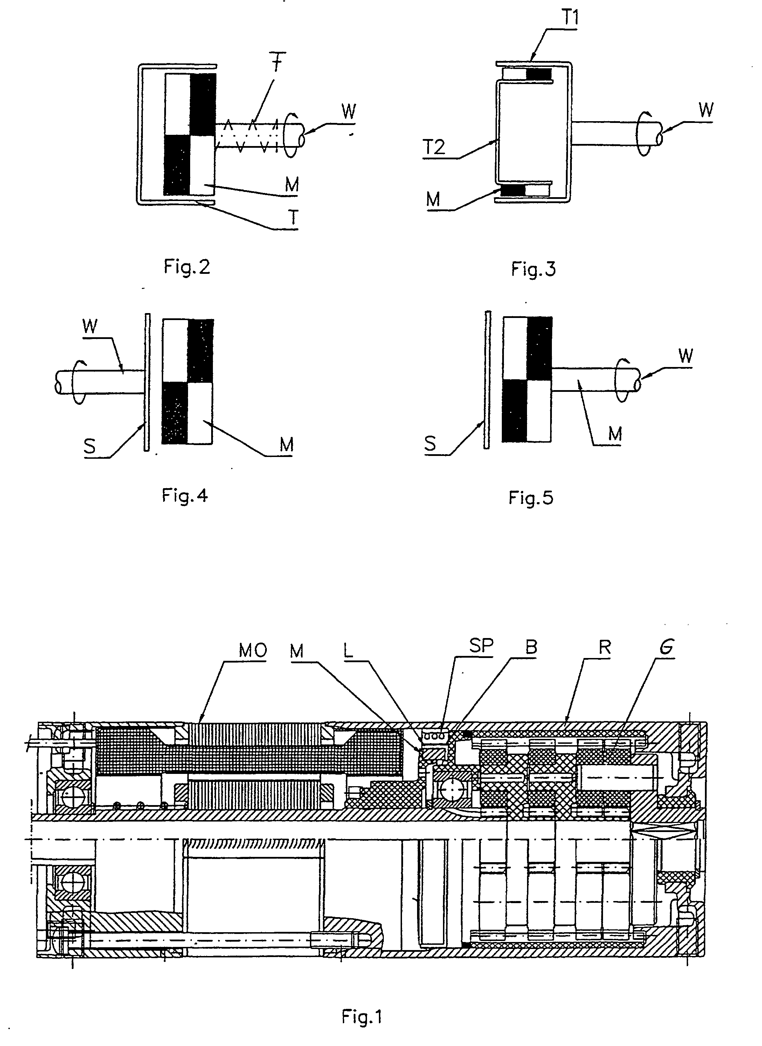

Bevor das in der Fig. 1 abgebildete Ausführungsbeispiel der Erfindung wie in den Patentansprüchen beschrieben erläutert wird, werden anhand der Fig. 2 bis 5 der Aufbau und die Funktion bekannter Hysteresebremsen erklärt.

Das Prinzip einer Hysteresebremse besteht darin, einen Magneten, der vorzugsweise mehrpolig magnetisiert ist, und ein oder mehrere Bremselemente mit einer an den Magneten angepassten Form aus einem Hysteresewerkstoff einander anzunähern. Wenn einer der beiden Teile der Hysteresebremse - der Magnet oder das Bremselement aus dem Hysteresewerkstoff - rotiert, wird bei Annäherung an den anderen Teil eine Bremswirkung auf die Rotation ausgeübt, weil der Hysteresewerkstoff ein unmagnetisierter Dauermagnetwerkstoff mit hoher Remmanenz - aber geringer Koerzitivfeldstärke ist. Nach demselben Prinzip funktioniert ein elektrischer Hysteresemotor, bei dem jedoch die Koerzitivfeldstärke groß gewählt ist

Es wird nun das in der Fig. 2 gezeigte erste nicht erfindungsgemäße Ausführungsbeispiel einer Trommelhysteresebremse beschrieben.

Ein mehrpolig magnetisierter Scheibenmagnet M sitzt auf einer rotierenden Welle W. Eine Trommel T aus einem Hysteresewerkstoff ist ähnlich, wie die Trommel einer Trommelbremse eines Fahrzeuges über die Bremsbeläge gestülpt ist, über den scheibenförmigen Magneten M gestülpt.

Bei Einsatz dieser Trommelhysteresebremse in der erfindungsgemäßen Antriebsvorrichtung sitzt eine als Druckfeder wirkende Schraubenfeder F auf der Welle W, die den Scheibenmagneten M in der Bremsstellung hält. Die Welle W ist mittels einer nicht gezeigten mechanischen Vorrichtung gegen den Druck der Feder aus der Bremsstellung axial bewegbar.

Bei dem in der Fig. 3 abgebildeten Ausführungsbeispiel einer nicht erfindungsgemäßen Trommelhysteresebremse sitzt eine Trommel T1, an deren Innenwand ein mehrpolig magnetisierter Ringmagnet M befestigt ist, auf einer rotierenden Welle W. Eine Trommel T2 aus einem Hysteresewerkstoff ragt in den vom Ringmagneten M gebildeten Innenraum.

Es wird nun das in der Fig. 4 abgebildete Ausführungsbeispiel einer nicht erfindungsgemäßen Scheibenhysteresebremse beschrieben.

In der Fig. 4 sitzt eine Scheibe S aus einem Hysteresewerkstoff auf einer rotierenden Welle W. Der Scheibe S gegenüber angeordnet ist ein mehrpolig magnetisierter Scheibenmagnet M.

Bei dem in der Fig. 5 gezeigten Ausführungsbeispiel einer Scheibenhysteresebremse sind die Scheibe S aus dem Hysteresewerkstoff und der scheibenförmige Magnet M vertauscht: der Magnet M sitzt auf der rotierenden Welle W während die Scheibe S dem Magneten gegenüber angeordnet ist.

Es wird nun das in der Fig. 1 gezeigte Ausführungsbeispiel der Erfindung beschrieben und erläutert.

Die Antriebswelle eines Elektromotors MO mit rohrförmigem Gehäuse R ist mit einem Planetengetriebe G verbunden. Auf der Antriebswelle des Elektromotors MO sitzt zwischen dem Elektromotor MO und dem Planetengetriebe G ein mehrpolig magnetisierter Ringmagnet M, dem gegenüber an der Innenseite des rohrförmigen Gehäuses R ein ringförmiges Hystereseband B aus einem Hysteresewerkstoff angeordnet ist. Die Hysteresebremse bestehend aus dem Ringmagneten M und dem Hystereseband B kann anstatt zwischen dem Elektromotor MO und dem Planetengetriebe G auch am anderen freien Ende der Welle des Elektromotors MO angeordnet sein.

Dieses erfindungsgemäße Ausführungsbeispiel sieht eine um das Hystereseband B angeordnete Kompensationsspule SP vor, um durch Bestromung dieser Kompensationsspule SP die Bremswirkung der Hysteresebremse aufheben zu können. Es handelt sich daher um eine ein- und ausschaltbare Hysteresebremse, die bei Stromausfall stets sicher bremst, weil die dann stromlose Kompensationsspule SP kein die Bremswirkung aufhebendes Magnetfeld mehr erzeugt.

Das in der Fig. 1 gezeigte Ausführungsbeispiel der Erfindung ist als Antrieb für einen Rolladen oder eine Jalousie besonders geeignet.

Der Rolladen oder die Jalousie werden von der Welle des Planetengetriebes auf- oder abbewegt. Wenn nun der Motor, bei eingeschaltener Hysteresebremse ausfällt, beispielsweise durch Stromausfall oder Kurzschluß, oder, bei ausgeschaltener Hysteresebremse, nach dem Stromtoswerden der Kompensatronsspule aufgrund eines Stromansfalls, bremst die Hysteresebremse aus dem Ringmagneten und dem Hystereseband den Rolladen oder die Jalousie sanft und sicher zum Stillstand ab ohne daß Bremsgeräusche auftreten. Durch das stetige sanfte Abbremsen bei der Erfindung werden die einzelnen Glieder des Rolladens oder der Jalousie nicht so stark beansprucht wie bei den bekannten Antrieben, weil diese ruckartig den Rolladen oder die Jalousie zum Stillstand abbremsen.

Die Erfindung ist jedoch keineswegs auf Antriebe für Rollläden, Jalousien, Markisen oder andere Behänge beschränkt; vielmehr läßt sich die Erfindung vorteilhaft in Antrieben bestehend aus einem Motor und einem Drehmomentwandler einsetzen. Der Motor braucht nicht unbedingt ein Elektromotor zu sein. Es kann sich beispielsweise auch um einen Verbrennungsmotor, einen Windkraftmotor, eine Wind- oder Wasserturbine oder z. B. um einen Sterlingmotor handeln.

### Bezugszeichenliste

- M: Magnet
- W: Welle
- T: Trommel
- T1: Trommel
- T2: Trommel
- MO: Motor
- B: Hystereseband
- G: Planetengetriebe
- S: Scheibe
- R: rohrförmiges Gehäuse
- F: Schraubenfeder

## Patentansprüche

1. Antriebsvorrichtung mit einem Motor (MO) und einem mit dem Motor (MO) mechanisch verbundenen Drehmomentwandler (G) sowie einer Hysteresebremse (M, B) zum unmittelbaren Bremsen der Motorwelle,
**dadurch gekennzeichnet, dass** durch Bestromung einer Kompensationsspule (SP) die Bremswirkung der Hysteresebremse (M, B) aufhebbar und somit die Hysteresebremse (M, B) ein- und ausschaltbar ist.

2. Antriebsvorrichtung nach Anspruch 1,
**dadurch gekennzeichnet, dass** die Hysteresebremse (M, B) zwischen dem Motor (MO) und dem Drehmomentwandler (G) angeordnet ist.

3. Antriebsvorrichtung nach Anspruch 1,
**dadurch gekennzeichnet, dass** die Hysteresebremse (M, B) an einem Ende des Motors (MO) angeordnet ist.

4. Antriebsvorrichtung nach einem der Ansprüche 1 bis 3,
**dadurch gekennzeichnet, dass** die Hysteresebremse (M, B) mindestens aus einem Ringmagneten (M) mit mehreren Segmenten und einem den Ringmagneten (M) konzentrisch umgebenden Hystereseband (B) aus Hysteresewerkstoff aufgebaut ist und dass zwischen dem Ringmagneten (M) und dem Hystereseband (B) ein Luftspalt (L) vorgesehen ist.

5. Antriebsvorrichtung nach Anspruch 4 ,
**dadurch gekennzeichnet, dass** die Kompensationsspule (SP) das Hystereseband (B) umgibt.

6. Antriebsvorrichtung nach einem der Ansprüche 1 bis 5,
**dadurch gekennzeichnet, dass** als Motor (MO) ein Elektromotor vorgesehen ist.

7. Antriebsvorrichtung nach einem der vorangehenden Ansprüche 1 bis 6,
**dadurch gekennzeichnet, dass** der Drehmomentwandler (G) vorzugsweise als Planetengetriebe ausgeführt ist.

8. Antriebsvorrichtung nach einem der Ansprüche 1 bis 7,
**dadurch gekennzeichnet, dass** der Elektromotor (MO) als Rohrmotor ausgeführt ist.

9. Antriebsvorrichtung nach Anspruch 8,
**dadurch gekennzeichnet, dass** der Ringmagnet (M) auf der Motorwelle zwischen dem Motor (MO) und dem Drehmomentwandler (G) sitzt, während das ringförmige Hystereseband (B) an der Innenwand eines rohrförmigen Gehäuses (R) befestigt ist.

10. Antriebsvorrichtung nach einem der Ansprüche 1 bis 9,
**dadurch gekennzeichnet, dass** die Antriebsvorrichtung zum Antrieb für Behänge, Rolläden, Jalousien oder Markisen vorgesehen ist.

## Claims

1. A drive mechanism having a motor (MO) and a torque converter (G) mechanically connected to the motor (MO) and also a hysteresis brake (M, B) for the direct braking of the motor shaft,
**characterised in that** the braking action of the hysteresis brake (M, B) can be cancelled by supplying current to a compensation coil (SP) and thus the hysteresis brake (M, B) can be switched on and off.

2. A drive mechanism according to Claim 1,
**characterised in that** the hysteresis brake (M, B) is disposed between the motor (M)) and the torque converter (G).

3. A drive mechanism according to Claim 1,
**characterised in that** the hysteresis brake (M, B) is disposed at a free end of the motor (MO).

4. A drive mechanism according to one of Claims 1 to 3,
**characterised in that** the hysteresis brake (M, B) is constructed of at least one ring magnet (M) having several segments and a hysteresis band (B) concentrically surrounding the ring magnet (M) and made from hysteresis material
and **in that** an air gap (L) is provided between the ring magnet (M) and the hysteresis band (B).

5. A drive mechanism according to Claim 4,
**characterised in that** the compensation coil (SP) surrounds the hysteresis band (B).

6. A drive mechanism according to one of Claims 1 to 5,
**characterised in that** an electric motor is provided as the motor (MO).

7. A drive mechanism according to one of the preceding Claims 1 to 6,
**characterised in that** the torque converter (G) is preferably designed as a planetary gearing.

8. A drive mechanism according to one of Claims 1 to 7,
**characterised in that** the electric motor (MO) is designed as a tubular motor.

9. A drive mechanism according to Claim 8,
**characterised in that** the ring magnet (M) is seated on the motor shaft between the motor (MO) and the torque converter (G), whereas the annular hysteresis band (B) is fixed to the inner wall of a tubular housing (R).

10. A drive mechanism according to one of Claims 1 to 9,
**characterised in that** the drive mechanism is provided for driving hangings, roller shutters, blinds or awnings.

## Revendications

1. Dispositif d'entraînement comprenant un moteur (MO) et un convertisseur de couple (G) relié mécaniquement au moteur (MO), ainsi qu'un frein à hystérésis (M, B) prévu pour le freinage direct de l'arbre du moteur,
**caractérisé en ce qu'**
en faisant circuler un courant dans une bobine de compensation (SP) l'effet de freinage du frein à hystérésis (M, B) peut être supprimé et le frein à hystérésis (M, B) peut ainsi être mis en action et hors d'action.

2. Dispositif d'entraînement selon la revendication 1,
**caractérisé en ce que**
le frein à hystérésis (M, B) est disposé entre le moteur (MO) et le convertisseur de couple (G).

3. Dispositif d'entraînement selon la revendication 1,
**caractérisé en ce que**
le frein à hystérésis (M, B) est disposé à une extrémité du moteur (MO).

4. Dispositif d'entraînement selon une des revendications 1 à 3,
**caractérisé en ce que**
le frein à hystérésis (M, B) est composé au moins d'un aimant annulaire (M) comprenant plusieurs segments et d'une bande à hystérésis (B) faite d'une matière à hystérésis qui entoure concentriquement l'aimant annulaire (M), et un entrefer (L) est prévu entre l'aimant annulaire (M) et la bande à hystérésis (B).

5. Dispositif d'entrainement selon la revendication 4,
**caractérisé en ce que**
la bobine de compensation (SP) entoure la bande à hystérésis (B).

6. Dispositif d'entraînement selon une des revendications 1 à 5,
**caractérisé en ce qu'**
un moteur électrique est prévu en qualité de moteur (MO).

7. Dispositif d'entraînement selon une des revendications précédentes 1 à 6,
**caractérisé en ce que**
le convertisseur de couple (G) est de préférence constitué par un mécanisme épicycloïdal.

8. Dispositif d'entraînement selon une des revendications 1 à 7,
**caractérisé en ce que**
le moteur électrique (MO) est constitué par un moteur tubulaire.

9. Dispositif d'entraînement selon la revendication 8,
**caractérisé en ce que**
l'aimant annulaire (M) est monté sur l'arbre du moteur entre le moteur (MO) et le convertisseur de couple (G), tandis que la bande à hystérésis annulaire (B) est fixée à la paroi intérieure d'un carter tubulaire (R).

10. Dispositif d'entraînement selon une des revendications 1 à 9,
**caractérisé en ce que**
le dispositif d'entraînement est prévu pour l'entraînement de tentures, de volets roulants, de stores intérieurs ou de stores extérieurs.
